# EUROPÄISCHE PATENTSCHRIFT

(11) **EP 2 072 477 B1**
(45) Veröffentlichungstag und Bekanntmachung des Hinweises auf die Patenterteilung: **10.03.2010**
(21) Anmeldenummer: 08171959.3
(22) Anmeldetag: 17.12.2008
(51) Int. Cl.: C03C 13/04

(54) **Kernglas im Alkali-Zink-Silikat-Glassystem für einen faseroptischen Lichtleiter und faseroptischer Lichtleiter mit diesem Kernglas**
Core glass in alkali-zinc-glass system for a fibre optic cable and fibre optic cable with same
Verre de coeur dans un système de verre alcali-zinc-silicate pour un conducteur lumineux à fibres optiques et conducteur lumineux à fibres optiques doté de ce verre de coeur

(30) Priorität: 20.12.2007 DE 102007063463
(43) Veröffentlichungstag der Anmeldung: 24.06.2009
(73) Patentinhaber: Schott AG, 55122 Mainz (DE)
(72) Erfinder: Curdt, Axel, 65388 Georgenborn (DE); Ehrt, Doris, 07747 Jena (DE); Kolberg, Uwe, 55130 Mainz (DE); Kron, Günther, 55128 Mainz (DE); Winkler-Trudewig, Magdalena, 55126 Mainz (DE); Gierke, Monika, 65205 Wiesbaden (DE)
(74) Vertreter: Fuchs

(56) Entgegenhaltungen:
- EP-A- 1 452 495
- WO-A-2007/104300
- WO-A-2007/104764
- US-A- 5 137 850
- DATABASE WPI Week 199642 Thomson Scientific, London, GB; AN 1996-423639 XP002516128 & RU 2 051 870 C1 (LYTKARINSK OPTICAL GLASS WKS STOCK CO) 10. Januar 1996 (1996-01-10)
- DATABASE WPI Week 199103 Thomson Scientific, London, GB; AN 1991-019613 XP002516129 & JP 02 293346 A (HOYA CORP) 4. Dezember 1990 (1990-12-04)

## Beschreibung

Die Erfindung betrifft ein Kernglas im Alkali-Zink-Silikat-Glassystem für einen faseroptischen Lichtleiter und einen faseroptischen Lichtleiter mit diesem Kernglas aus diesem Glas.

Faseroptische Lichtleiter finden zunehmend größere Verbreitung bei der Lichtübertragung in den unterschiedlichsten technischen und medizinischen Bereichen, z.B. in der allgemeinen Industrietechnik, der Beleuchtungs- und Verkehrstechnik, der Automobilindustrie, in der Dentalmedizin, in der Endoskopie usw.. Aufgrund ihrer guten thermischen und chemischen Widerstandsfähigkeit werden in der Regel faseroptische Lichtleiter aus Glas eingesetzt, die aus zu Faserbündeln zusammengesetzten Einzelfasem bestehen. Die einzelne Lichtleitfaser leitet das Licht durch Totalreflexion. Die am weitesten verbreiteten Lichtleitfasern sind die Stufenindexfasern, die aus einem Kern aus Kernglas bestehen, wobei das Kernglas eine konstante Brechzahl über seinen Querschnitt besitzt. Das Kernglas ist von einem Mantel aus Mantelglas umgeben, das eine niedrigere Brechzahl als das Kernglas besitzt. An der Grenzfläche zwischen Kern- und Mantelglas tritt die Totalreflexion auf.

Die Lichtmenge, die in eine solche Faser eingekoppelt werden kann, ist proportional dem Quadrat der numerischen Apertur (NA) der Faser und der Querschnittsfläche des Faserkerns.

Neben der numerischen Apertur spielt auch die Dämpfung des Lichts in der Faser eine große Rolle. Deshalb können nur Kerngläser mit geringer Dämpfung Verwendung finden. Die Rohstoffe zum Erschmelzen solcher Kerngläser sind auf Grund ihrer hohen Reinheit recht teuer, was zu erheblichen Herstellkosten solcher Fasern bzw. daraus hergestellter Lichtleiter führen kann. Weiterhin können toxische Bestandteile wie PbO, CdO, BeO, HgO, Tl₂O, ThO₂ aus umweltrelevanten Gründen nicht mehr verwendet werden.

Neben der Lichtmenge, die ein faseroptischer Lichtleiter überträgt, spielt häufig auch eine farbsticharme Übertragung des Lichtes durch ihn eine bedeutende Rolle. Aufgrund der spektralen Transmissionsabhängigkeit des Kernglases, das die Fasern enthalten, erfolgt eine mehr oder weniger starke Farbverschiebung des Farbortes der eingekoppelten Lichtquelle, was sich meist in einem Gelbstich des aus dem Lichtleiter austretenden Lichtes bemerkbar macht. Dies wirkt sich überall dort störend aus, wo es auf farbneutrale Wiedergabe ankommt, z. B. in der medizinischen Endoskopie, bei fotographischer Bilddokumentation zur Differenzierung von z. B. gesundem und malignem Gewerbe u.a.m.

Insbesondere bei mobilen Anwendungen ist weiterhin die Zuverlässigkeit der Faser von Bedeutung, d. h. die Alterungsbeständigkeit bei Temperaturwechselbeanspruchungen zwischen ca. -50° C und 110° C, die Beständigkeit gegenüber mechanischen Beanspruchungen, insbesondere die Schwingungsfestigkeit sowie die chemische Beständigkeit gegenüber Umwelteinflüssen. Dabei ist insbesondere die hydrolytische Beständigkeit und die Säurebeständigkeit des Kerns von Bedeutung. Von Bedeutung ist auch die Dichte der Fasern, da diese einen direkten Einfluss auf die Nutzlast und den Treibstoffverbrauch eines Flugzeugs oder Automobils ausübt. Die Dichte einer Stufenindexfaser wird hauptsächlich durch die Dichte des Kernglases bestimmt.

Die Aufgabe der Erfindung besteht darin, ein neues preiswert herstellbares Kernglas für eine optische Stufenindexfaser sowie eine optische Faser mit diesem Kernglas zu finden. Insbesondere soll die Reaktion des Kernglases mit dem Mantelglas besonders gering sein. Weiterhin soll das Kernglas und insbesondere eine unter seiner Verwendung hergestellte Faser unter widrigen Bedingungen, bei z. B. Behandlungen im Autoklaven, möglichst wenig angegriffen werden, insbesondere soll das Kernglas der Säurebeständigkeitsklasse 1 angehören.

Diese Aufgabe wird durch ein Kernglas im Alkali-Zink-Silikat-Glassystem gelöst, das in Mol% auf Oxidbasis enthält 54,5 - 65 SiO₂, 18,5 - 30 ZnO, 8 - 20 Σ Alkalioxide, 0,5 - 3 La₂O₃, 2 - 5 ZrO₂, 0,02 - 5 HfO₂, 2,02 - 5 ZrO₂ + HfO₂, 0,4 - 6 BaO, 0,0 - 6 SrO, 0 - 2 MgO, 0 - 2 CaO, 0,4 - 6 Σ Erdalkalioxide, 0,5 - 3 Li₂O, jedoch nicht mehr Li₂O als 25 % der Summe der Alkalioxide, > 58,5 Σ SiO₂ + ZrO₂ + HfO₂ und bei dem das Verhältnis Na_{2O} : K₂O 1 : 1,1 bis 1 : 0,3 sowie das Verhältnis ZnO : BaO größer als 3,5 : 1 ist.

Das Glas enthält als Glasbildner SiO₂. Ab einer Konzentration von > 50 Mol% ist Glasbildung möglich und tritt auch in diesem System auf. Jedoch ist hier die chemische Beständigkeit, insbesondere die Säureresistenz nicht ausreichend. Zur Erzielung der besten Säurebeständigkeit der Klasse 1. x - 1.0, (x=1,2,3) wie sie hier gefordert ist, ist eine SiO₂-Konzentration von mindestens 54,5 Mol% SiO₂, bevorzugt mindestens 55 Mol% erforderlich. Damit die Schmelztemperaturen - und insbesondere die Läutertemperaturen nicht zu hoch werden, enthält das Glas maximal 65 Mol% SiO₂, bevorzugt für Läutertemperaturen von < 1450° C maximal 61 Mol%. Eine niedrige Läutertemperatur ist dafür entscheidend, dass das Glas in der Pt-Läuterkammer möglichst wenig Pt aufnimmt und somit keinen Gelbstich zeigt. Der Bereich für den SiO₂-Gehalt des Glases beträgt somit 54,5 - 65 Mol%, bevorzugt 55 - 61 Mol%.

Weiterhin kann das Glas bis 5 Mol% B₂O₃ als Glasbildner enthalten. Dies senkt die Viskositätskurve und somit Schmelz-, Läuter- und Verarbeitungstemperaturen. Jedoch verschlechtert eine derartig hohe Konzentration von 5 Mol% die chemische Beständigkeit des Glases, so dass, wenn überhaupt nur 0 - 1 Mol% B₂O₃ verwendet werden unter der Randbedingung, dass die effektive SiO₂-Konzentration c (SiO₂) - c (B₂O₃) weiterhin > 55 Mol% ist. Wenn ein chemisch besonders stabiles Glas erzeugt werden soll, wird bevorzugt vollständig auf B₂O₃ verzichtet, da die geforderten Viskositätseigenschaften auch über die anderen Glaskomponenten eingestellt werden können. Es hat sich jedoch gezeigt, dass ein B₂O₃-Gehalt sich positiv auf die Solarisationseigenschaften des Glases auswirkt. Wird daher ein großer Wert auf gute Solarisationseigenschaften des Glases unter Inkaufnahme einer etwas geringeren chemischen Stabilität gelegt, so kann man mit einem Gehalt von 0,2 bis 2 Mol% B₂O₃, insbesondere mit 1 bis 2 Mol%, ganz besonders bevorzugt mit 1 bis 1,5 Mol% B₂O₃ die Solarisationsbeständigkeit des Glases deutlich verbessern.

Als weiterer Glasbildner kann P₂O₅ wirken. Jedoch ist es vorteilhaft, die P₂O₅-Konzentration möglichst klein zu halten. Verwendet man im Gemenge komplexe Phosphate MPO₃, so hat man eine massive Verunreinigungsquelle für die 3d-Farboxide, insbesondere Fe₂O₃, die zu unerwünschten Verfärbungen führen. Verwendet man freies P₂O₅, so kann es zu unerwünschten und stark exothermen Gemengereaktionen kommen, die den Gesamtschmelzprozess schwierig zu handhaben und damit teuer machen. Außerdem kann diese Komponente mit BaO, ZrO₂ und/oder HfO₂ zu unerwünschten Kristallisationsprodukten führen. Aus diesem Grund ist die Anwesenheit von P₂O₅ auf 0 - 0,5 Mol% zu beschränken. Vorteilhafterweise enthält das Glas gar kein P₂O₅.

Schließlich kann das Glas noch GeO₂ zwischen 0 - 5 Mol% als Glasbildner enthalten. GeO₂ hat positive Auswirkungen auf den Brechwert des Glases und damit die numerische Apertur der Faser. Des Weiteren kann es dazu beitragen, die Viskosität zu senken und die Kristallisation silikatischer Phasen zu vermindern. Seinem Einsatz steht insbesondere der hohe Preis entgegen. Der Fachmann wird im Einzelfall im Stande sein abzuwägen, ob der Einsatz von GeO₂ unter diesen Randbedingungen wirtschaftlich sinnvoll ist. Obwohl technisch durchaus sinnvoll und machbar, wird unter Zugrundelegung des heutigen Rohstoffpreises auf die Verwendung von GeO₂ aus rein wirtschaftlichen Gründen im allgemeinen verzichtet.

Neben den Netzwerkbildnern benötigt das Glas für eine Herstellbarkeit in konventionellen Wannen bei moderaten Temperaturen noch Netzwerkwandler. Verwendet werden hierfür Alkalioxide im Bereich 8 - 20 Mol%, bevorzugt 11 - 16 Mol%. Wird der Anteil an Alkalioxiden im Glas größer als 20 Mol% leidet die chemische Beständigkeit und der Ausdehnungskoeffizient steigt zu stark an, was zu einer erhöhten Tendenz zur Bildung von Rissen führt. Wird der Anteil der Alkalioxide kleiner als 8 Mol%, wird die Schmelzbarkeit des Glases erschwert, die Kristallisationsneigung nimmt zu und der Ausdehnungskoeffizient wird kleiner als 7x10⁻⁶K⁻¹, wodurch die Vorspannung der weiter unten beschriebenen Faser und damit ihre Festigkeit gegenüber mechanischen Beanspruchungen abnimmt.

Zur Anwendung kommen hauptsächlich die Alkalioxide Li₂O, Na₂O und K₂O. Die Verwendung von Rb₂O und Cs₂O ist ebenfalls möglich in Mengen von etwa je bis zu 6 Mol%, jedoch aufgrund des deutlich höheren Preises nur in Sonderfällen von Interesse. Das Verhältnis der 3 genannten Alkalioxide Li₂O, Na₂O und K₂O zueinander und zu den Alkalioxiden im Mantelglas ist für die Verwendung als Kernglas von Bedeutung. Während des Faserziehprozesses kommt es nämlich zu Interdiffusionsprozessen der mobilsten Ionen, also hauptsächlich der Alkaliionen. Bis zu einem gewissen Ausmaß sind diese Vorgänge erwünscht, da sie zu einer chemischen Verbindung zwischen Kern und Mantelglas führen und somit erst die Stabilität der Faser gewährleisten. Wenn diese Vorgänge zu stark werden oder Ionen diffundieren, die durch Verarmung oder Anreicherung in Kern- oder Mantelglas zur Ausbildung von kristallinen Phasen beitragen, werden diese Diffusionsprozesse kontraproduktiv. Somit sollten Konzentrationsgradienten zwischen Kern und Mantelglas zwar vorhanden sein, aber andererseits auch nicht zu groß werden.

Im allgemeinen ist es am günstigsten, wenn Na₂O das Oxid mit dem größten molaren Anteil ist, insbesondere bei Gläsern mit relativ niedrigem SiO₂-Anteil und damit höherer Beweglichkeit der Alkaliionen. Bei Gläsern mit höherem SiO₂-Anteil kann der K₂O -Anteil in etwa genauso groß werden, wie der Na₂O-Anteil, sollte diesen aber nicht nennenswert überschreiten.

Das Verhältnis von Na₂O zu K₂O soll daher zwischen 1 : 1,05 bis 1 : 0,3 liegen. Besonders bevorzugt ist ein Verhältnis von Na₂O zu K₂O von 1 : 0,95 bis 1 : 0,4.

Besonderes Augenmerk muss auch auf den Anteil des Li₂O gelegt werden. Das Li⁺-Ion stellt die mobilste Komponente des Systems dar und trägt außerdem, insbesondere bei Anwesenheit von Al₂O₃ und ZrO₂ als Keimbildner, zur Bildung von kristallinen Phasen wie LiAlO₂ bei. ZrO₂ ist, wie weiter unten beschrieben, zur Einstellung der optischen Eigenschaften unverzichtbar. Der Einsatz von Al₂O₃ im Kernglas muss bis auf die rohstoffbedingten Verunreinigungen vermieden werden. Da viele Mantelgläser Al₂O₃ enthalten, wäre es eigentlich nahe liegend, auf Li₂O im Kernglas ganz zu verzichten, um die Gefahr durch Kristallisationseffekte an der Kern-Mantelgrenzfläche zu minimieren. Jedoch gibt es auch eine Anzahl von Mantelgläsern, die selbst Li₂O enthalten.

Wenn im Kernglas gar kein Li₂O enthalten ist, kommt es bei Li₂O-haltigen Mantelgläsern zur Eindiffusion von Li₂O aus dem Mantelglas, was die optische Qualität der Kern-Mantel-Grenzfläche negativ beeinflussen kann.

Um ein gegebenes Kernglas mit verschiedenen Mantelgläsern kombinieren zu können und daraus eine Vielzahl verschiedener Produkte herstellen zu können, hat es sich als sinnvoll herausgestellt, einen Li₂O-Anteil im Kernglas vorzusehen. Dieser Anteil sollte hoch genug sein, um die negativen Effekte durch Eindiffusion aus Li₂O-haltigen Mantelgläsern zu unterdrücken und niedrig genug sein, um Kristallisationseffekte in Li₂O-freien, Al₂O₃-haltigen Mantelgläsern zu vermeiden. Wie die Erfinder durch intensive Bemühungen gefunden haben, wird dieses Ziel durch einen Li₂O-Anteil von 0,5 - 3 Mol%, bevorzugt von 1,0 - 2,5 Mol% und besonders bevorzugt von 1,2 - 2,2 Mol% erreicht. Weiterhin ist darauf zu achten, dass ein Li₂O-Anteil von 25 %, bevorzugt 20 %, am Gesamtalkaligehalt nicht überschritten wird.

Weiterhin enthält das Kernglas ZnO in Mengen von 18,5 bis 30 Mol%, bevorzugt 20 bis 25 Mol%. ZnO wirkt ebenfalls als Netzwerkwandler und dient außerdem zur Einstellung der optischen Eigenschaften der Kernfaser.

Als Netzwerkwandler bewirkt es im Gegensatz zu den bisher beschriebenen Oxiden, die eine mehr oder wenige konstante Verschiebung der Viskositätskurve über alle Temperaturen bewirken, ein stärkeres Absinken bei hohen Temperaturen und ein schwächeres Absinken bis Ansteigen bei tieferen Temperaturen, d.h. ein Verkippen der Viskositätskurve. Dies ist ein sehr wünschenswertes Verhalten, da eine niedrige Viskosität beim Einschmelzen (< 1300° C) und Läutern (< 1450° C, bevorzugt < 1400 ° C) bei möglichst niedrigen Temperaturen vorliegen soll. Dies minimiert den Angriff auf das Wannenmaterial und verhindert einen Gelbstich beispielsweise durch Lösen von Platin aus dem Wannenmaterial. Um eine Kompatibilität mit geeigneten Mantelgläsern beim Faserziehen zu gewährleisten, darf die Temperatur im Bereich um 10^{6±1} dPa*s aber nicht zu niedrig sein, d. h. die Temperatur bei dem Verarbeitungspunkt V_{A} (Viskosität 10⁴ dPa*s) sollte über 900° C liegen und die Temperatur bei dem Erweichungspunkt E_{W} (Viskosität 10^{7,6} dPa*s) sollte über 680° C, bevorzugt oberhalb 700° C, liegen.

Vorteilhaft für die Einstellung optischer Eigenschaften ist, dass ZnO ein hohes Brechwertinkrement hat und daher die Erzielung eines hohen Brechwertes und damit der numerischen Apertur bewirkt. Außerdem ist ZnO in hoher Reinheit (in Bezug auf färbende Verunreinigen) zu einem günstigen Preis erhältlich. Seine Eigenabsorption liegt relativ weit im UV, so dass der sichtbare Spektralbereich wenig beeinflusst wird.Die Kombination von hohem Brechwertinkrement, geringer Eigenabsorption und hoher Reinheit machen ZnO zu einem idealen Bestandteil faseroptischer Kerngläser, bei denen eine geringe Dämpfung gefordert ist. Eine weitere positive Eigenschaft des ZnO, insbesondere gegenüber BaO, das sonst als Hauptträger hoher Brechwerte in faseroptischen Gläsern verwendet wird, ist die Ausbildung nur einer einzigen kristallinen zinkreichen Phase im System R₂O-ZnO-SiO₂. Im entsprechenden BaO (SrO)-System existieren mehrere dieser störenden Phasen. Von daher sind ZnO-Systeme gegenüber den BaO-Systemen bevorzugt, da sie in größeren Zusammensetzungsbereichen weniger zur Kristallisation neigen, in höherer Reinheit erhältlich sind und eine etwas geringere UV-Eigenabsorption aufweisen. Fasern aus hoch ZnO-haltigen Kemgläsern zeigen daher geringere Dämpfungen und weniger Kristallisationsanfälligkeit als entsprechende, auf BaO basierende Systeme.

Auch das vorliegende Kernglas kann BaO enthalten, jedoch gegenüber ZnO nur in untergeordneten Mengen von 0,4 bis 6 Mol%, bevorzugt in Mengen von 0,4 bis 5 Mol%.

Ähnlich wie ZnO liefert BaO ein hohes Brechwertinkrement und trägt aufgrund seiner hohen Basizität ähnlich wie die Alkalioxide zur Auflösung saurer Komponenten wie SiO₂ und ZrO₂ bei. Jedoch neigt BaO stärker zur Kristallisation als ZnO und sollte daher nur in untergeordneten Mengen eingesetzt werden. Ebenso ist ZnO aus den Gründen Reinheit und Eigenabsorption zu bevorzugen, wie oben beschrieben.

BaO kann komplett oder teilweise durch SrO substituiert werden (0 - 6 Mol%, bevorzugt bis 5 Mol%). Jedoch ergeben sich dadurch keine wesentlichen Vorteile und SrO ist bei gleicher Reinheit meist teurer als BaO. Deswegen kommt es nicht oder nur in untergeordnetem Umfang zum Einsatz. CaO und MgO (je 0 - 2 Mol%) können ebenfalls einen Teil des BaO substituieren, haben jedoch eher negative Auswirkungen auf Brechwert, Säurebeständigkeit und Verunreinigerlevel, so dass bevorzugt auf ihre Verwendung verzichtet wird.

Um die guten Eigenschaften des Kernglases zu erhalten, darf die Summe der Erdalkalioxide 6 Mol% nicht überschreiten und der Erdalkaligehalt im Verhältnis zum ZnO-Gehalt nicht zu groß werden. Das molare Verhältnis zu ZnO:Σ Erdalkalioxide soll mindestens > 3,5 :1, bevorzugt > 4:1 betragen.

Durch die bisher erwähnten Komponenten wird das Grundglassystem definiert. Zur Erreichung eines hohen Brechwertes bei gleichzeitig guter chemischer Beständigkeit und geringer Kristallisationsneigung reichen diese Komponenten jedoch nicht aus und es müssen weitere Hilfsoxide herangezogen werden. Hierbei sind insbesondere La₂O₃, ZrO₂ und HfO₂ zu nennen.

La₂O₃ ist eine Komponente mit sehr hohem Brechwertinkrement und wird daher im Bereich von 0,5 - 3,0, bevorzugt 1,5 - 2,9 Mol% besonders bevorzugt 2,0 - 2,75 Mol% eingesetzt. Unter 0,5 Mol% wird die Brechwertsteigerung zu gering, unter 1,5 Mol% muss der gewünschte Brechwert durch einen überproportionalen Einsatz anderer Komponenten sichergestellt werden, was meist andere Nachteile hat. Von daher wird der untere Bereich von 0,5 -1,5 Mol% nur in besonders begründeten Ausnahmefällen verwendet. Oberhalb von 2,75 Mol% steigt die Kristallisation stark an, so dass das Glas nicht mehr für alle Fasertypen verwendet werden kann, z. B. können kleine Faserdurchmesser, die lange Standzeiten beim Ziehprozess verursachen nicht mehr mit guter Ausbeute produziert werden. Für Spezialfälle kann eine Anwendung aber noch sinnvoll sein. Oberhalb 3 Mol% ist die Kristallisation kaum noch beherrschbar, so dass darauf im Anwendungsgebiet auf Fasern verzichtet werden muss. Des Weiteren ist La₂O₃ sehr aggressiv gegenüber SiO₂-haltigen Feuerfestmaterialien. Auch aus diesem Grund sollte der Einsatz auf maximal 3 Mol% begrenzt bleiben, um für die Herstellung noch Standardschmelzwannen verwenden zu können.

Bekanntermaßen kann La₂O₃ durch äquivalente Mengen Gd₂O₃und Lu₂O₃ ersetzt werden. Da diese Oxide jedoch deutlich teurer und weniger rein sind, wird im allgemeinen darauf verzichtet. Y₂O₃ hat ein kleineres Brechwertinkrement bei höherem Preis und wird deshalb ebenfalls nicht verwendet. Auch der Einsatz geringer Mengen zur Unterdrückung der Kristallisation scheint in diesem Fall wirkungslos zu sein, so dass sich auch aus diesem Ansatz kein Grund zur Verwendung von Y₂O₃ herleiten lässt. Gleiches gilt für Sc₂O₃.

Zwei essentielle Komponenten für die Einstellung eines hohen Brechwertes und zur Erzielung einer guten chemischen Beständigkeit sind ZrO₂ und HfO₂. Ein Mindestgehalt von HfO₂ von 0,02 Mol% ist erforderlich, da HfO₂der Kristallisationstendenz des Glases entgegenwirkt. Zur Erzielung eines hohen Brechwertes ist ein Mindestgehalt von 2,02 Mol% für die Summe aus ZrO₂ und HfO₂ erforderlich, der Maximalgehalt für die Summe der beiden Oxide soll 5 Mol% nicht überschreiten, da darüber hinaus die Schmelzbarkeit abnimmt und die Kristallisationstendenz zunimmt. Unter Berücksichtigung dieser Summenbedingung beträgt der Gehalt an ZrO₂ 2 - 5 Mol% und der Gehalt an HfO₂ 0,02 bis 5 Mol%, bevorzugt wird ein Gehalt von 2 - 4,08 Mol% ZrO₂ und 0,02 - 4,1 Mol% HfO₂. Es ist dabei überraschend, dass sich trotz des geringen Minimalgehalts an HfO₂ bereits positive Auswirkungen auf die Kristallisationstendenz abzeichnen. Preis und Reinheit des HfO₂ sind allerdings derzeit gegenüber ZrO₂ noch nicht wettbewerbsfähig, so dass aus rein pragmatischen Gründen ein HfO₂-Gehalt über 1 Mol% nur selten in Frage kommt. Im allgemeinen kommt ein HfO₂-Gehalt von weniger als 0,3 Mol% zur Anwendung.

Weiterhin hat sich gezeigt, dass zur Erzielung einer guten Säurebeständigkeit ein Mindestgehalt der Bestandteile SiO₂+ZrO₂+ HfO₂ erforderlich ist. Die Summe der Bestandteile SiO₂+ZrO₂+ HfO₂ soll mindestens 58,8 Mol%, bevorzugt mindestens 59 Mol% betragen.

Im Bereich unterhalb 58,8 Mol% wird sich die beste Säureklasse 1.x nur in Ausnahmefällen einstellen. Im Bereich zwischen 58,8 und 59 Mol% wird sich bevorzugt die Klasse 1 neben einigen Fällen der Klasse 2 einstellen und im Bereich oberhalb 59 Mol% wird sich die Klasse 1 einstellen, allerdings kann es in der Nähe der 59 Mol% noch dazu kommen, dass sich nicht die Klasse 1.0 einstellt, sondern die Subklasse 1.x (mit x = 1-2-3). Diese zeigt zwar keinen Abtrag mehr, weist aber ggf. noch optische Veränderungen der Glasoberfläche auf (Interferenzfarben).

Weiter kann das Glas 0-3 Mol% Nb₂O₅ und Ta₂O₅ enthalten. Beide Oxide können in ähnlicher Weise zur Einstellung der optischen Eigenschaften (n_{d} - v_{d}) genutzt werden. Jedoch sind beide, insbesondere das Ta₂O₅, teurer als die anderen hochbrechenden Oxide (ZrO₂, La₂O₃, HfO₂), so dass genau zu überlegen ist, ob der Gewinn an n_{d} nicht besser über die anderen Oxide erreicht werden kann. Insbesondere beim Nb₂O₅ ist noch zu beachten, dass die zurzeit erhältliche Reinheit nicht zufriedenstellend ist und es auch mit einem Teil der Mantelgläser zu unerwünschten, die Dämpfung erhöhenden Grenzflächeneffekten kommt. Aus diesem Grund enthält das Glas vorzugsweise kein Nb₂O₅.

Falls nicht gänzlich Läutermittel-frei geläutert wird, wird eine Läuterung mit As₂O₃ und/oder Sb₂O₃ in Mengen von insgesamt bis zu 0,5 Mol% bevorzugt. Bevorzugt wird hierbei As₂O₃ eingesetzt, da es insbesondere an der Blaukante bessere Dämpfungsergebnisse liefert als Sb₂O₃. Es hat sich jedoch gezeigt, dass mit Sb₂O₃ geläutertes Glas ein günstigeres Solarisationsverhältnis zeigt als ein mit As₂O₃ geläutertes. Legt man besonderen Wert auf eine gute Solarisationsbeständigkeit, so wird man bevorzugt mit Sb₂O₃ läutern und den As₂O₃-Gehalt möglichst gering halten. Die eingesetzten Glasrohstoffe sollen dann möglichst As₂O₃-frei sein. Ein Anteil von 500 ppm, bevorzugt 100 ppm, insbesondere 50 ppm (Mol) an As₂O₃ soll nicht überschritten werden. Bevorzugt wird zur Hebung der Solarisationsbeständigkeit eine Menge von 0,05 bis 0,4 Mol%, insbesondere 0,1 bis 0,2 Mol% Sb₂O₃. Auf die Verwendung von Sulfaten und Chloriden als Läutermittel sollte verzichtet werden, da sie die Dämpfung eher negativ beeinflussen.

Der Gehalt an färbenden Verunreinigungen wie Fe₂O₃, Cr₂O₃, NiO, CuO und weiteren färbenden d-Elemente sowie färbenden Seltenerdoxiden soll möglichst niedrig sein. Daher soll eine Obergrenze von <10ppm, bevorzugt <1ppm für die Summe dieser Verunreiniger nicht überschritten werden.

Es hat sich ferner gezeigt, dass durch Zugabe von geringen Mengen an WO₃, Bi₂O₃ und/oder TiO₂ die Solarisationsstabilität des Glases weiter verbessert werden kann. Allerdings üben diese Oxide eine negative Wirkung auf die Dämpfung aus. Wenn zum Zwecke der Solarisationsverbesserung ein Zusatz dieser Oxide erfolgt, soll er jeweils 0,05 bis 0,5 Mol% für die Oxide Bi₂O₃ und TiO₂ betragen, für WO₃ sollen wegen der hohen Färbekraft des WO₃ nur 0,05 bis 0,35 Mol% zur Anwendung kommen. Bevorzugt wird eine Menge von jeweils 0,1 bis 0,3 Mol% pro Oxid. Die Oxide Bi₂O₃, TiO₂ und WO₃können jeweils einzeln, aber auch in Kombination miteinander zur Anwendung kommen. Eine Kombination von einem oder mehreren dieser Oxide mit 0,2 bis 2 Mol% B₂O₃ übt einen besonders positiven Einfluss auf die Solarisationsstabilität aus. Die Kombination von 1 Mol% B₂O₃ mit 0,3 Mol% TiO₂ hat sich besonders bewährt.

Weiterhin existiert außer der Anforderung einer geringen Dämpfung noch die Anforderung einer möglichst neutralen Farbtemperatur. Da in den verwendeten Rohstoffen hauptsächlich die Verunreiniger Fe, Cr, Ni sowie, bedingt durch den Schmelzprozess, Pt auftreten, weisen die Fasern aus diesen Gläsern bei großen Anwendungslängen häufig einen Gelbstich auf. Aus diesem Grund kann es sinnvoll sein, den Gläsern geringste Mengen CoO zuzusetzen und sie somit neutral zu färben. Die zum Einsatz kommenden Mengen an CoO betragen 3-100 ppb, bevorzugt 5-50 ppb. Die Farbtemperaturen steigen dadurch auf Werte bis über 5700 K an (Normlicht D65, 3,8 m Länge).

### Beispiele

Zur Herstellung der Kerngläser wurden Gemenge aus herkömmlichen Rohstoffen in einen induktiv beheizten Platin-Heiztiegel mit Kieselglastiegeleinsatz, bei 1420° C über einen Zeitraum von ca. 5h eingelegt. Angegeben ist die außen am Pt-Tiegel mit einem Thermoelement gemessene Temperatur. Durch den Kieseiglastiegel geht Wärme verloren, so dass die pyrometrisch gemessene Glastemperatur je nach Schmelzphase bis zu 80° C niedriger sein kann. Danach folgt eine Abstehphase von ca. 0,75h, während der sich letzte Schmelzrelikte auflösen und eine Rauläuterung stattfindet. Danach folgt eine Rührphase von ca. 15 Min zur Grobhomogenisierung (Kieselglasrührer). Die Feinläuterung wird bei 1460° C im Verlauf von 15 Min durchgeführt. Danach wird auf 1320° C abgerührt und die gewünschten Formen gegossen. Diese Formen werden bei ca. 590° C in einen Laborkühlofen eingesetzt und mit einer Rate von 10K/h auf Raumtemperatur abgekühlt.

Die Ergebnisse sind in der Tabelle 1 zusammengefasst. Die Angaben zur Zusammensetzung der Gläser sind in Mol% auf Oxidbasis angegeben. Weiterhin bedeuten n_{d} den Brechungsindex, ν_{d} die Abbe-Zahl, α_{20/300} den linearen thermischen Wärmeausdehnungskoeffizienten im Bereich von 20° C bis 300° C gemäß ISO 7991, Tg die Glastransformationstemperatur gemäß ISO 7884, ρ die Dichte nach der Auftriebsmethode (Buoancy flotation method) entsprechend dem Archimedischen Prinzip, E_{W} die Erweichungstemperatur (Glasviskosität von 10^{7,6} dPa*s) V_{A} die Verarbeitungstemperatur (Glasviskosität von 10⁴ dPa*s), CR die Klimaresistenzklasse gemäß ISO/WD 13384.
FR bedeutet die Fleckresistenz. Zur Bestimmung der Fleckresistenz wird eine polierte Platte mit einer Standard-Acetatpufferlösung mit einem pH-Wert von 4,6 bei 25° C kontaktiert. Ein Fleck gibt sich durch eine bläulich-bräunliche Interferenzfarbe zu erkennen (was einer Schichtdicke für den Fleck von 0,1 µm entspricht). Die Fleckresistenz wird wie folgt klassifiziert:
   Klasse 0: nach 100 Stunden Behandlung ist kein Fleck erkennbar,
   Klasse 1: nach 100 Stunden Behandlung ist ein Fleck erkennbar,
   Klasse 2: nach 6 Stunden Behandlung ist ein Fleck erkennbar,
   Klasse 3: nach 1 Stunde Behandlung ist ein Fleck erkennbar.
SR bedeutet die Säureresistenzklasse gemäß ISO 8424,
AR bedeutet die Alkaliresistenzklasse gemäß ISO 9689,
OEG (T) bedeutet die obere Entglasungstemperatur in °C,
OEG (lg n) bedeutet der dekadische Logarithmus der Viskosität bei der oberen Entglasungstemperatur OEG(T).

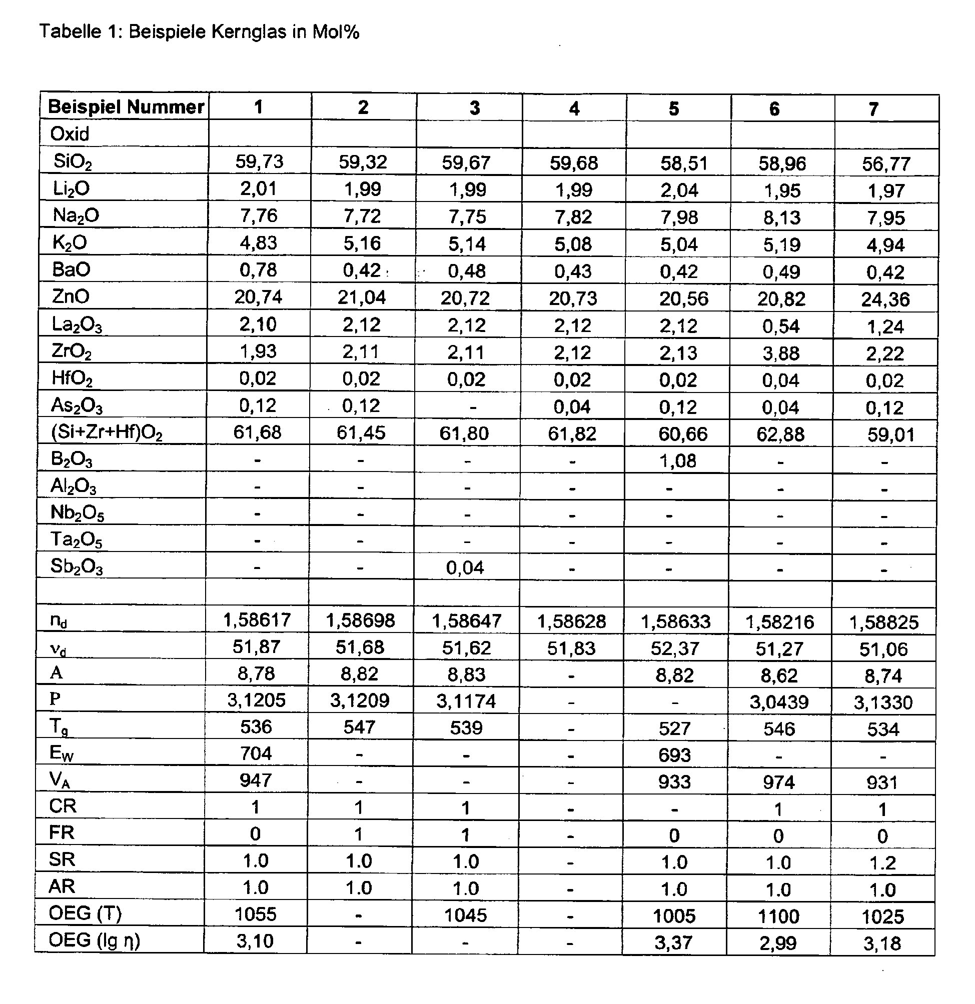

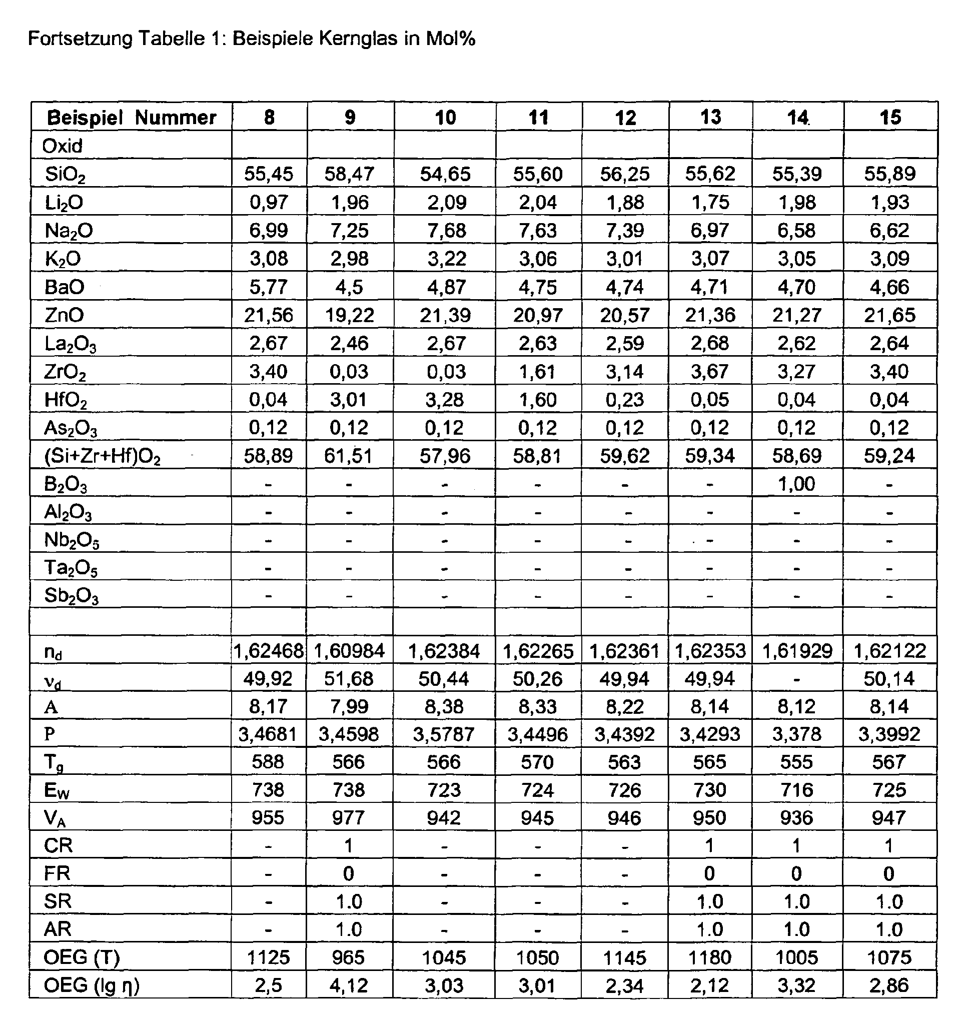

Die Herstellung optischer Stufenindexfasern aus Mehrkomponentengläsern erfolgt entweder über das so genannte Doppeltiegel- oder Stab-Rohr-Verfahren. In beiden Fällen werden Kern-und Mantelglas auf Temperaturen erhitzt, die einem Viskositätsbereich zwischen 10⁴ bis 10³ dPa*s entsprechen und dabei zu einer Faser ausgezogen. Damit eine stabile Faser niedriger Dämpfung hergestellt werden kann, müssen Kern- und Mantelglas in einer Reihe von Eigenschaften wie Viskositätsverlauf, thermischer Ausdehnung, Kristallisationsneigung u.a.m. kompatibel zueinander sein. Insbesondere darf es in der Grenzfläche zwischen Faserkern und - mantel nicht zu Reaktionen zwischen Kern- und Mantelglas, z.B. Diffusion oder Kristallisation, kommen, was eine Totalreflexion des im Faserkern geführten Lichtes stört und dadurch die Dämpfung erhöht. Darüber hinaus wird auch die mechanische Festigkeit der Faser durch Kristallisation negativ beeinträchtigt.

Das Mantelglas besteht aus einem Silikatglas, das einen Brechungsindex besitzt, der mindestens 2% niedriger ist als der des Kernglases und eine Viskosität, die bei der Temperatur, bei der die Faser gezogen wird, bevorzugt gleich oder höher ist als die Viskosität des Kernglases. Die höhere Viskosität des Mantelglases gegenüber dem Kernglas verbessert die Stabilität des Ziehprozesses. Ferner soll der lineare thermische Ausdehnungskoeffizient α des Mantelglases gleich oder insbesondere bevorzugt wenigstens um 2 x 10⁻⁶ K⁻¹ kleiner sein als der des Kernglases. Durch einen geringeren Ausdehnungskoeffizienten bekommt der Fasermantel beim Abkühlen eine Vorspannung, welche die mechanische Stabilität der Faser erhöht. Die Vorspannung darf jedoch nicht so groß werden, dass Probleme bei der Faserfertigung auftreten. Das lässt sich in der Regel vermeiden, wenn die Differenz der thermischen Ausdehnungskoeffizienten unter etwa 5 - 6 x 10⁻⁶ K⁻¹ liegt.

Der Brechwert des Mantelglases n_{d} soll kleiner als 1,5 sein, um eine große Numerische Apertur NA der Faser zu erreichen. Lediglich wenn gezielt eine kleinere NA erreicht werden soll, ist es sinnvoll, Glastypen mit höherer Brechwertlage als Mantelglas einzusetzen.

Des Weiteren soll für eine gute Ziehbarkeit der Faser sowie Verarbeitbarkeit der Fasern vorzugsweise das Mantelglas höherschmelzend als das Kernglas sein, wie Versuche ergeben haben. Dies gilt insbesondere, wenn die Fasern zur Konfektionierung eines Lichtleiters gebündelt und unter radialem Druck verschmolzen werden.

Aus Gründen der Wirtschaftlichkeit wurde für die Mantelgläser auf bekannte und verfügbare Rohrglastypen zurückgegriffen, an die das Kernglas so angepasst wurde, dass keine Kristallisation oder andere Entglasungseffekte an der Kern-Mantel-Grenzfläche auftreten.

Die aufgrund ihrer Brechwertlage, Viskositätslage, thermischer Ausdehnung sowie Verfügbarkeit relevanten Rohrgläser lassen sich in 3 Gruppen einteilen, zu der jeweils verschiedene Vertreter gehören.

Gläser der Gruppe 1 umfassen die so genannten Neutralgläser, wie sie als Primärpackmittel in der Pharmaindustrie eingesetzt werden (z. B. Glas 8800 oder 8412 von SCHOTT). Diese Li₂O-freien Borosilikatgläser sind als Mantelgläser für die hier beschriebenen Stufenindexfasern bevorzugt. Mit einer thermischen Dehnung im Bereich um 5 ppm/K sind sie gut an die Kerngläser angepasst. Der niedrige Brechwert im Bereich um 1,49 ermöglicht hohe Öffnungswinkel und NA der Faser.

Gläser der Gruppe 2 umfassen Li₂O-haltige Borosilikatgläser mit hohem B₂O₃-Anteil über 15%. In diese Gruppe fallen Kovargläser (z. B. 8242, 8245 und 8250 von SCHOTT) und UV-durchlässige Borosilikatgläser (z. B. 8337b von SCHOTT). Mit diesen Mantelgläsern können teilweise funktionsfähige Fasern erzeugt werden.

Gläser der Gruppe 3 umfassen die Borosilikatgläser der Norm DIN ISO 3585 ("borosilicate glass 3.3"). Die Anpassung an die Mantelgläser ist wegen der niedrigen thermischen Dehnung zwischen 3 und 4x10⁻⁶ K⁻¹ nicht optimal. Die mechanische Belastbarkeit der Faser ist geringer als bei Verwendung von Mantelgläsern der Gruppe 2, da auch eine verstärkte Kristallisation an der Phasengrenze zwischen Kern- und Mantelglas zu beobachten ist.

Die Zusammensetzung der einzelnen Mantelglasgruppen ist in der Tabelle 2 zusammengefasst. Die Mantelgläser enthalten (in Gew.-% auf Oxidbasis:

**Tabelle 2: Mantelgläser**

| | Gruppe 1 | | | Gruppe 2 | | | | Gruppe 3 | |
|---|---|---|---|---|---|---|---|---|---|
| Oxid | Bereich | Beispiel 1a | Beispiel 1b | Bereich | Beispiel 2a | Beispiel 2b | Beispiel 2c | Bereich | Beispiel 3a |
| SiO₂ | 70-78 | 75,1 | 73,9 | 62 - 70 | 68,0 | 68,5 | 67,1 | 75-85 | 80,6 |
| Al₂O₃ | 5-10 | 5,2 | 6,6 | 0-10 | 5,6 | 2,7 | 5,0 | 1-5 | 2,4 |
| B₂O₃ | 5-14 | 10,5 | 9,6 | >15 | 18,5 | 19,0 | 20,8 | 10 - 14 | 12,7 |
| Li₂O | - | - | - | >0.1 | 0,5 | 0,7 | 0,7 | - | - |
| Na₂O | 0-10 | 7 | 6,6 | 0-10 | 6,9 | 0,7 | 2,5 | 2 - 8 | 3,5 |
| K₂O | 0-10 | 0,2 | 2,6 | 0-10 | - | 7,6 | 1,6 | 0-1 | 0,6 |
| MgO | 0-1 | - | 0,01 | 0-5 | - | - | - | - | - |
| CaO | 0-2 | 1,5 | 0,7 | 0-5 | - | - | 0,6 | - | - |
| SrO | 0-1 | - | - | 0-5 | - | - | - | - | - |
| BaO | 0-3 | 0,6 | 0,04 | 0-5 | - | - | 1,3 | - | - |
| ZnO | - | - | - | 0-5 | 1,0 | 0,6 | - | - | - |
| F | 0-1 | 0,2 | - | 0-1 | - | - | 0,8 | - | - |
| Physikalische und chem. Eigenschaften | | | | | | | | | |
| n_{d} | - | 1,492 | 1,488 | - | 1,488 | 1,487 | 1,476 | - | 1,473 |
| α [10⁻⁶K⁻¹] | - | 4,9 | 5,5 | - | 5,1 | 5,0 | 4,2 | - | 3,3 |
| ρ [g/cm³] | - | 2,34 | 2,34 | - | 2,31 | 2,28 | 2,21 | - | 2,23 |
| W | - | 1 | 1 | - | 3 | 3 | 3 | - | 1 |
| S | - | 1 | 1 | - | 4 | 4 | 4 | - | 1 |
| L | - | 2 | 2 | - | 3 | 3 | 3 | - | 2 |

| | | | | | | | | | |
|---|---|---|---|---|---|---|---|---|---|
| Dabei bedeuten α die thermische Ausdehnung im Temperaturbereich von 20°C bis 300°C in [10⁻⁶K⁻¹] ρ die Dichte in [g/cm³] W die hydrolytische Beständigkeit nach DIN ISO 720 S die Säurebeständigkeit nach DIN 12116 L die Laugenbeständigkeit nach DIN ISO 695 | | | | | | | | | |

Aus ausgewählten Kern-Gläsern gemäß Tabelle 1 "Kerngläser" zusammen mit ausgewählten Mantelgläsern gemäß Tabelle 2 "Mantelgläser" wurden optische Fasern mit einem Durchmesser von 30, 50 und 70 µm hergestellt und ihre physikalischen Daten ermittelt. Die Herstellung der Fasern erfolgte nach dem bekannten Stab-Rohr-Ziehverfahren auf einer üblichen Stab-Rohr-Ziehmaschine mit zylindrischem Ofen gemäß Stand der Technik. Aus den Fasern wurden weiterhin faseroptische Lichtleiter hergestellt, indem die Fasern zu einem Faserbündel von 2-3 mm Durchmesser zusammengefasst in Endhülsen verklebt wurden und durch Schleifen und Polieren die optischen Endflächen für Lichtein- und -austritt hergestellt worden sind.

An Einzelfasern des Durchmessers 70 µm wurde die Dämpfung der Fasern gemäß DIN 58141 Teil 1 (Cut-Back-Verfahren) bestimmt. Des Weiteren wurde der mittlere Bruchschlingendurchmesser gemessen, der die Grundfestigkeit der Faser widerspiegelt. Der Bruchschlingendurchmesser wird ermittelt, indem die Faser in eine Schlaufe gelegt wird, deren Durchmesser langsam reduziert wird, bis es schließlich beim Bruchschlingendurchmesser zum Bruch der Faser kommt.

An den Lichtleitern wurde zum einen die spektrale Transmission nach DIN 58141, Teil 2 für eine Probenlänge von 1 m und 3,8m sowie die Numerische Apertur nach DIN 58141, Teil 3 für eine Probenlänge von 1 m bei 550 nm gemessen.

Als Maß für die Gelbstichigkeit der Faser wurde ferner die Farbtemperatur bezogen auf die Normlichtquelle D65 (Farbtemperatur 6504 K) des aus der Faser nach Durchgang durch eine bestimmte Faserlänge austretenden Lichts berechnet. Je stärker die Farbtemperatur von der Farbtemperatur der Normlichtquelle D65 nach unten abweicht, desto stärker ist die Gelbstichigkeit.

Die Ergebnisse sind in den folgenden Tabellen 3 und 4 aufgeteilt in den NA-Bereich um 0,54 in "Fasereigenschaften I" und den NA-Bereich um 0,64 in "Fasereigenschaften II" zusammengefasst. Zum Vergleich sind auch Vergleichsdaten von bleihaltigen Fasertypen mit vergleichbaren Numerischen Aperturen von 0,54 und von 0,64 mit angegeben, wobei jeweils zwischen einem in einem Pt-freien Schmelzgefäß, d.h. ohne einen dämpfungserhöhenden Pt-Einfluss erzeugten Glas sowie einem Pt-haltigen Glas, das in einem Pt-haltigen Schmelzgefäß hergestellt wurde, unterschieden wird.

Aus den Ausführungsbeispielen der bleifreien Faser Nr. F3 bis F5 im NA-Bereich von 0,54 ist ersichtlich, dass die bleifreien Fasern gemäß dieser Erfindung den bisher vielgenutzten bleihaltigen Fasern F1 und F2 bezogen auf die Dämpfung, Transmission und den Öffnungswinkel sowohl in der Pt-freien als auch in der Pt-haltigen Version ebenbürtig sind. Dabei werden die optischen Eigenschaften für die bleifreien Gläser gemäß Beispiel 4 aus Tab. 1 sowohl mit einem Mantelglas der Gruppe I (F3) als auch mit einem Mantelglas der Gruppe 2 (F5) erreicht. Es zeigt sich jedoch auch, dass nicht mit jeder Kombination der neuen Kerngläser mit jedem Mantelglas der Gruppe 2 optimale Fasern erzeugt werden können, wie sich aus dem Beispiel F6 mit dem Mantelglas 2c gemäß Tabelle 2 ergibt.

Auch im NA-Bereich von 0,64 erreichen die Ausführungsbeispiele F9 und F10 der bleifreien Faser ähnliche optische Eigenschaften wie die bleihaltigen Gläser Fasern F7 und F8. Vergleicht man z.B. die Qualitäten F10 und F7aus dem Pt-haltigen Schmelzgefäß, so ergibt sich, dass die bleifreie Faser F10 ähnliche Transmissionswerte und Öffnungswinkel wie die bleihaltige Faser F7 erreicht. Die Farbtemperatur einer Probe mit 3,8 m Länge liegt mit 5501 K ca. 50 K unter der bleihaltigen Faser mit 5546 K. Die Farbtemperatur kann durch eine geringe Cobalt-Dotierung, die gezielt die Dämpfung ab ca. 500 nm anhebt, deutlich angehoben werden, wie am Bsp. F12 zu erkennen ist. Der in diesem Falle zu erwartende geringe Transmissonsrückgang wird in diesem Fall zugunsten der geringeren Farbstichigkeit in Kauf genommen.

Aus Ausführungsbeispiel F12 ist weiterhin ersichtbar, dass auch die hochbrechenderen Kerngläser gemäß dieser Erfindung mit Kerngläsern der Gruppe 2 verträglich sind. Beispiel 11 zeigt, dass durch eine entsprechend hohe Co-Dotierung die Farbtemperatur D65 sogar über den optimalen Wert von 6504 K hinaus angehoben werden kann.

**Tabelle 3: Fasereigenschaften I - NA-Bereich 0.54 (Faserdurchmesser 70µm)**

| **Fasertyp Nr.** | **F1** | **F2** | **F3** | **F4** | **F5** | **F6** |
|---|---|---|---|---|---|---|
| Kategorie | Bleihaltige Faser | Bleihaltige Faser, Pt - frei | Bleifreie Faser mit Gruppe 1 - Mantelglas | Bleifreie Faser, Pt-frei, mit Gruppe 1 - Mantelglas | Bleifreie Faser mit Gruppe 2 - Mantelglas | Bleifreie Faser mit Gruppe 2 - Mantelglas, |
| | Gegenbeispiel | Gegenbeispiel | | | | Gegenbeispiel |
| Kernglas nach Tab.1 "Kerngläser" , Beispiel-Nr. | Bleisilikat n_{d}=1,582 | Bleisilikat n_{d}=1,582 | 4 | 4 | 4 | 4 |
| Mantelglas nach Tab. 2 Beispiel-Nr. | 2b | 2b | 1b | 1b | 2b | 2c |
| Theoretische NA | 0,54 | 0,54 | 0,54 | 0,54 | 0,55 | 0,58 |
| Gemessene NA bei 550nm für 1 m Länge | 0,55 | 0,53 | - | 0,54 | 0,52 | - |
| Faserdämpfung, 70µm | | | | | | |
| ... bei 400nm [dB/km] | 607 | 328 | 423 | 290 | 298 | 1937 |
| ... bei 450nm [dB/km] | 423 | 244 | 351 | 230 | 280 | 2079 |
| ... bei 550nm [dB/km] | 205 | 128 | 131 | 124 | 118 | 1571 |
| ... bei 650nm [dB/km] | 259 | 142 | 147 | 122 | 143 | 1280 |
| Transmission, 70µm, Länge 1m | | | | | | |
| ... bei 458 nm [%] | 55 | 59,7 | 62,3 | 59,4 | 58,2 | - |
| ... bei 553 nm [%] | 58 | 62,0 | 65,8 | 61,1 | 60,6 | - |
| ... bei 654 nm [%] | 58 | 61,9 | 65,8 | 61 | 60,6 | - |
| Farbtemperatur D65 für Probenlänge 1 m [K] | 6230 | 6355 | 6205 | 6491 | 6357 | - |
| Bruchschlingendurch-Messer, 70µm [mm] | 1,9 | 1,8 | 2,0 | 2,2 | 1,7 | 2,2 |

**Tabelle 4: Fasereigenschaften II - NA-Bereich 0.64 (Faserdurchmesser 70µm)**

| **Fasertyp Nr.** | **F7** | **F8** | **F9** | **F10** | **F11** | **F12** |
|---|---|---|---|---|---|---|
| Kategorie | bleihaltige Faser, mit Pt-Einfluss, NA 0,64 | bleihaltige Faser, Pt- freie Qualität, NA 0,64 | bleifreie Faser, Pt-frei | bleifreie Faser mit Pt-Einfluss | bleifreie Faser mit Pt-Einfluss und Co-Dotierung | bleifreie Faser mit Gruppe 2 Mantel-Glas, Pt-frei |
| | Gegenbeispiel | Gegenbeispiel | | | | |
| Kernglas nach Tab.1 "Kerngläser", Beispiel-Nr. | Bleisilikat n_{d}=1,620 | Bleisilikat n_{d}=1,620 | 15 | 15 | 15 | 15 |
| Mantelglas nach Tab. 2 Beispiel-Nr. | Gruppe 2 | Gruppe 2 | 1b | 1b | 1b | 2b |
| Theoretische NA | 0,64 | 0,64 | 0,64 | 0,64 | 0,64 | 0,64 |
| Gemessene NA bei 550nm für 1 m Länge | 0,64 | 0,61 | 0,64 | 0,63 | - | 0,63 |
| Faserdämpfung, 70µm | | | | | | |
| ... bei 400nm [dB/km] | 944 | 724 | 420 | 714 | 690 | 468 |
| ... bei 450nm [dB/km] | 595 | 372 | 316 | 566 | 600 | 366 |
| ... bei 550nm [dB/km] | 237 | 169 | 144 | 213 | 519 | 198 |
| ... bei 650nm [dB/km] | 236 | 140 | 133 | 242 | 712 | 185 |
| Transmission, 70µm, Länge 1m | | | | | | |
| ... bei 458 nm [%] | 60,7 | 59 | 58,9 | 60,7 | - | 59,1 |
| ... bei 553 nm [%] | 64,9 | 62,0 | 61,6 | 66,2 | - | 61,8 |
| ... bei 654 nm [%] | 65,3 | 63,0 | 61,8 | 65,9 | - | 61,9 |
| Farbtemperatur D65 für Probenlänge 3,8 m [K] | 5546 | 5714 | 5855 | 5501 | 6797 | 5854 |
| Bruchschlingendurchmesser, 70µm [mm] | 2,1 | 2,0 | 1,7 | 1,9 | - | 1,7 |

## Patentansprüche

1. Kernglas im Alkali-Zink-Silikat-Glassystem für eine Stufenindexfaser, enthaltend (in Mol% auf Oxidbasis):
54,5 - 65 SiO₂
18,5 - 30 ZnO
8 - 20 Σ Alkalioxide
0,5 - 3 La₂O₃
2 - 5 ZrO₂
0,02 - 5 HfO₂
2,02 - 5 ZrO₂ + HfO₂
0,4 - 6 BaO
0 - 6 SrO
0 - 2 MgO
0 - 2 CaO
0,4 - 6 Σ Erdalkalioxide
0,5 - 3 Li₂O, jedoch nicht mehr als 25 Mol% der Σ Alkalioxide
> 58,5 Σ SiO + ZrO₂ + HfO₂
Verhältnis ZnO : Σ Erdalkalioxide > 3,5 : 1.

2. Kernglas nach Anspruch 1, enthaltend
2 - 4,08 ZrO₂
0,02 - 3,3 HfO₂
2,02 - 4,1 Σ ZrO₂ + HfO₂.

3. Kernglas nach Anspruch 1, enthaltend
55 - 61 SiO₂
20 - 25 ZnO
11 - 16 Σ Alkalioxide
1,5 - 2,9 La₂O₃
2 - 4,08 ZrO₂
0,02 - 3,3 HfO₂
2,02 - 4,1 ZrO₂ + HfO₂
0,4 - 5 BaO
0,4 - 5 SrO
0,4 - 5 Σ Erdalkalioxide
1 - 2,5 Li₂O, jedoch nicht mehr als 25% der Σ Alkalioxide
> 59 Σ SiO₂ + ZrO₂ + HfO₂

4. Kernglas nach einem der Ansprüche 1 bis 3, **gekennzeichnet durch** ein Verhältnis Na₂O : K₂O von 1 : 1,1 bis 1: 0,3.

5. Kernglas nach einem der Ansprüche 1 bis 4 mit einem Verhältnis Na₂O : K₂O von 1 : 0,95 bis 1 : 0,4.

6. Kernglas nach einem der Ansprüche 1 bis 5 mit einem Verhältnis ZnO : Σ Erdalkalioxide > 4 : 1.

7. Kernglas nach einem der den Ansprüche 1 oder 6, enthaltend
0 - 5 B₂O₃ und/oder
0 - 0,5 P₂O₅ und/oder
0 - 5 GeO₂ und/oder
0 - 6 Rb₂O und/oder
0 - 6 Cs₂O.

8. Kernglas nach einem der Ansprüche 1 bis 7, enthaltend 0,2 bis 2 Mol% B₂O₃.

9. Kernglas nach einem der Ansprüche 1 bis 8, enthaltend 0,05 bis 0,4 Mol% Sb₂O₃, insbesondere 0,1 bis 0,2 Mol% Sb₂O₃.

10. Kernglas nach einem der Ansprüche 1 bis 9, enthaltend
0,05 bis 0,5 Mol% Bi₂O₃ und/oder
0,05 bis 0,5 Mol% TiO₂ und/oder
0,05 bis 0,35 Mol% WO₃.

11. Kernglas nach Anspruch 10, enthaltend
0,1 bis 0,3 Mol% Bi₂O₃ und/oder
0,1 bis 0,3 Mol% TiO₂ und/oder
0,1 bis 0,3 Mol% WO₃.

12. Stufenindexfaser bestehend aus Kern und Mantel, **dadurch gekennzeichnet, dass** das Kernglas aus einem Glas gemäß einem der Ansprüche 1 bis 11 besteht.

13. Stufenindexfaser nach Anspruch 12, **dadurch gekennzeichnet, dass** das Mantelglas enthält (in Gew.% auf Oxidbasis)
| | |
|---|---|
| SiO₂ | 70 - 78 |
| Al₂O₃ | 0 - 10 |
| B₂O₃ | 5 - 14 |
| Li₂O | 0 |
| Na₂O | 0 - 10 |
| K₂O | 0 - 10 |
| MgO | 0 - 1 |
| CaO | 0 - 2 |
| SrO | 0 - 1 |
| BaO | 0 - 3 |
| F | 0-1. |

14. Stufenindexfaser nach Anspruch 12, **dadurch gekennzeichnet, dass** das Mantelglas enthält (in Gew.% auf Oxidbasis)
| | |
|---|---|
| SiO₂ | 62 - 70 |
| B₂O₃ | > 15 |
| Li₂O | >0.1 |
| Na₂O | 0 - 10 |
| K₂O | 0 - 10 |
| MgO | 0-5 |
| CaO | 0 - 5 |
| SrO | 0 - 5 |
| BaO | 0 - 5 |
| ZnO | 0 - 5 |
| F | 0-1. |

15. Stufenindexfaser nach Anspruch 12, **dadurch gekennzeichnet, dass** das Mantelglas enthält (in Gew.% auf Oxidbasis)
| | |
|---|---|
| SiO₂ | 75 - 85 |
| Al₂O₃ | 1 - 5 |
| B₂O₃ | 10 - 14 |
| Na₂O | 2-8 |
| K₂O | 0-1. |

## Claims

1. Core glass in the alkali metal zinc silicate glass system for a step-index fibre, containing (in mol% based on oxide):
54.5 - 65 SiO₂
18.5 - 30 ZnO
8 - 20 Σ alkali metal oxides
0.5 - 3 La₂O₃
2 - 5 ZrO₂
0.02 - 5 HfO₂
2.02 - 5 ZrO₂ + HfO₂
0.4 - 6BaO
0 - 6 SrO
0 - 2 MgO
0 - 2 CaO
0.4 - 6 Σ alkaline earth metal oxides
0.5 - 3 Li₂O, but not more than 25 mol% of the Σ alkali metal oxides
> 58.5 Σ SiO + ZrO₂ + HfO₂
Ratio ZnO: Σ alkaline earth metal oxides > 3.5: 1.

2. Core glass according to Claim 1, containing
2 - 4.08 ZrO₂
0.02 - 3.3 HfO₂
2.02 - 4.1 Σ ZrO₂ + HfO₂.

3. Core glass according to Claim 1, containing
55 - 61 SiO₂
20 - 25 ZnO
11 - 16 Σ alkali metal oxides
1.5 - 2.9 La₂O₃
2 - 4.08 ZrO₂
0.02 - 3.3 HfO₂
2.02 - 4.1 ZrO₂ + HfO₂
0.4 - 5 BaO
0.4 - 5 SrO
0.4 - 5 Σ alkaline earth metal oxides
1 - 2.5 Li₂O, but not more than 25% of the Σ alkali metal oxides
> 59 Σ SiO₂ + ZrO₂ +HfO₂

4. Core glass according to any of Claims 1 to 3, **characterized by** a Na₂O: K₂O ratio of 1: 1.1 to 1: 0.3.

5. Core glass according to any of Claims 1 to 4 having an Na₂O: K₂O ratio of 1: 0.95 to 1: 0.4.

6. Core glass according to any of Claims 1 to 5 having a ratio ZnO: Σ alkaline earth metal oxides > 4: 1.

7. Core glass according to either of Claims 1 and 6, containing
0 - 5 B₂O₃ and/or
0 - 0.5 P₂O₅ and/or
0 - 5 GeO₂ and/or
0 - 6 Rb₂O and/or
0 - 6 Cs₂O.

8. Core glass according to any of Claims 1 to 7, containing 0.2 to 2 mol% B₂O₃.

9. Core glass according to any of Claims 1 to 8, containing 0.05 to 0.4 mol% Sb₂O₃, in particular 0.1 to 0.2 mol% Sb₂O₃.

10. Core glass according to any of Claims 1 to 9, containing
0.05 to 0.5 mol% Bi₂O₃ and/or
0.05 to 0.5 mol% TiO₂ and/or
0.05 to 0.35 mol% WO₃.

11. Core glass according to Claim 10, containing
0.1 to 0.3 mol% Bi₂O₃ and/or
0.1 to 0.3 mol% TiO₂ and/or
0.1 to 0.3 mol% WO₃.

12. Step-index fibre consisting of core and cladding, **characterized in that** the core glass consists of a glass according to any of Claims 1 to 11.

13. Step-index fibre according to Claim 12, **characterized in that** the cladding glass contains (in % by weight based on oxide)
| | |
|---|---|
| SiO₂ | 70 - 78 |
| Al₂O₃ | 0 - 10 |
| B₂O₃ | 5 - 14 |
| Li₂O | 0 |
| Na₂O | 0 - 10 |
| K₂O | 0 - 10 |
| MgO | 0 - 1 |
| CaO | 0 - 2 |
| SrO | 0 - 1 |
| BaO | 0 - 3 |
| F | 0-1. |

14. Step-index fibre according to Claim 12, **characterized in that** the cladding glass contains (in % by weight based on oxide)
| | |
|---|---|
| SiO₂ | 62 - 70 |
| B₂O₃ | > 15 |
| Li₂O | >0.1 |
| Na₂O | 0 - 10 |
| K₂O | 0 - 10 |
| MgO | 0-5 |
| CaO | 0 - 5 |
| SrO | 0 - 5 |
| BaO | 0 - 5 |
| ZnO | 0 - 5 |
| F | 0-1. |

15. Step-index fibre according to Claim 12, **characterized in that** the cladding glass contains (in % by weight based on oxide)
| | |
|---|---|
| SiO₂ | 75 - 85 |
| Al₂O₃ | 1 - 5 |
| B₂O₃ | 10 - 14 |
| Na₂O | 2-8 |
| K₂O | 0-1. |

## Revendications

1. Verre d'âme en système de verre aux alcalis, au zinc et au silicate pour fibres à saut d'indice, contenant (en % en moles sur base des oxydes) :
| | |
|---|---|
| 54,5 - 65 | de SiO₂ |
| 18,5 - 30 | de ZnO |
| 8 - 20 | de la Σ des oxydes de métaux alcalins |
| 0,5 - 3 | de La₂O₃ |
| 2 - 5 | de ZrO₂ |
| 0,02 - 5 | de HfO₂ |
| 2,02 - 5 | de ZrO₂ + HfO₂ |
| 0,4 - 6 | de BaO |
| 0 - 6 | de SrO |
| 0 - 2 | de MgO |
| 0 - 2 | de CaO |
| 0,4 - 6 | de la Σ oxydes de métaux alcalino-terreux |
| 0,5 - 3 | de Li₂O, mais pas plus de 25 % en moles de la Σ des oxydes de métaux alcalins |
| > 58,5 | de la Σ SiO + ZrO₂+HfO₂ |
| | |
et avec un rapport ZnO : Σ des oxydes de métaux alcalino-terreux > 3,5 : 1.

2. Verre d'âme selon la revendication 1, contenant :
| | |
|---|---|
| 2 - 4,08 | de ZrO₂ |
| 0,02 - 3,3 | de HfO₂ |
| 2,02 - 4,1 | de la Σ ZrO₂ + HfO₂ |

3. Verre d'âme selon la revendication 1, contenant :
| | |
|---|---|
| 55 - 61 | de SiO₂ |
| 20 - 25 | de ZnO |
| 11 - 16 | de la Σ des oxydes de métaux alcalins |
| 1, 5 - 2,9 | de La₂O₃ |
| 2 - 4,08 | de ZrO₂ |
| 0,02 - 3,3 | de HfO₂ |
| 2,02 - 4,1 | de ZrO₂ + HfO₂ |
| 0,4 - 5 | de BaO |
| 0,4 - 5 | de SrO |
| 0,4 - 5 | de la Σ des oxydes de métaux alcalino-terreux |
| 1 - 2,5 | de Li₂O, mais pas plus de 25 % de la Σ des oxydes de métaux alcalins |
| > 59 | de la Σ SiO + ZrO₂ + HfO₂. |

4. Verre d'âme selon l'une des revendications 1 à 3, **caractérisé par** un rapport Na₂O : K₂O de 1 : 1,1 à 1 : 0,3.

5. Verre d'âme selon l'une des revendications 1 à 4, dont le rapport Na₂O : K₂O est de 1 : 0,95 à 1 : 0,4.

6. Verre d'âme selon l'une des revendications 1 à 5, dont le rapport ZnO : Σ oxydes de métaux alcalino terreux > 4 : 1.

7. Verre d'âme selon l'une des revendications 1 ou 6, contenant :
| | |
|---|---|
| 0 - 5 | de B₂O₃ et/ou |
| 0 - 0,5 | de P₂O₅ et/ou |
| 0 - 5 | de GeO₂ et/ou |
| 0 - 6 | de Rb₂O et/ou |
| 0 - 6 | de Cs₂O. |

8. Verre d'âme selon l'une des revendications 1 à 7, contenant de 0,2 à 2 % en moles de B₂O₃.

9. Verre d'âme selon l'une des revendications 1 à 8, contenant de 0,05 à 0,4 % en moles de Sb₂O₃ et en particulier de 0,1 à 0,2 % en moles Sb₂O₃.

10. Verre d'âme selon l'une des revendications 1 à 9, contenant :
| | |
|---|---|
| 0,05 à 0,5 % en moles | de Bi₂O₃ et/ou |
| 0,05 à 0,5 % en moles | de TiO₂ et/ou |
| 0,05 à 0,35 % en moles | de WO₃. |

11. Verre d'âme selon la revendication 10, contenant
| | |
|---|---|
| 0,1 à 0,3 % en moles | de Bi₂O₃ et/ou |
| 0,1 à 0,3 % en moles | de TiO₂ et/ou |
| 0,1 à 0,3 % en moles | de WO₃. |

12. Fibre à saut d'indice constituée d'une âme et d'une enveloppe, **caractérisée en ce que** le verre d'âme est constitué d'un verre selon l'une des revendications 1 à 11.

13. Fibre à saut d'indice selon la revendication 12, **caractérisée en ce que** le verre d'enveloppe contient (en % en poids sur base des oxydes) :
| | |
|---|---|
| SiO₂ | 70 - 78 |
| Al₂O₃ | 0 - 10 |
| B₂O₃ | 5 - 14 |
| Li₂O | 0 |
| Na₂O | 0 - 10 |
| K₂O | 0 - 10 |
| MgO | 0 - 1 |
| CaO | 0 - 2 |
| SrO | 0 - 1 |
| BaO | 0 - 3 |
| F | 0-1. |

14. Fibre à saut d'indice selon la revendication 12, **caractérisée en ce que** le verre d'enveloppe contient (en % en poids sur base des oxydes) :
| | |
|---|---|
| SiO₂ | 62 - 70 |
| B₂O₃ | > 15 |
| Li₂O | >0.1 |
| Na₂O | 0 - 10 |
| K₂O | 0 - 10 |
| MgO | 0-5 |
| CaO | 0 - 5 |
| SrO | 0 - 5 |
| BaO | 0 - 5 |
| ZnO | 0 - 5 |
| F | 0-1. |

15. Fibre à saut d'indice selon la revendication 12, **caractérisée en ce que** le verre d'enveloppe contient (en % en poids sur base des oxydes) :
| | |
|---|---|
| SiO₂ | 75 - 85 |
| Al₂O₃ | 1 - 5 |
| B₂O₃ | 10 - 14 |
| Na₂O | 2-8 |
| K₂O | 0-1. |
